# FASCICULE DE BREVET EUROPEEN

(11) **EP 0 338 957 B1**
(45) Date de publication et mention de la délivrance du brevet: **09.02.1994**
(21) Numéro de dépôt: 89440032.4
(22) Date de dépôt: 18.04.1989
(51) Int. Cl.: H04N 5/232, H04N 5/262

(54) **Interface de pilotage de caméscopes/magnétoscopes 8mm et accessoires par ordinateur**
Computergesteuerte Schnittstelle für 8 mm-Format-Kamerarekorder/Videorekorder und Zusatzgeräte
Computer operated interface for 8 mm videocamera/videorecorder and additional devices

(30) Priorité: 18.04.1988 FR 8805265
(43) Date de publication de la demande: 25.10.1989
(73) Titulaire: Falck, Francis, F-67410 Drusenheim (FR)
(72) Inventeur: Falck, Francis, F-67410 Drusenheim (FR)
(74) Mandataire: Nuss, Pierre

(56) Documents cités:
- US-A- 4 578 718
- S.M.P.T.E. JOURNAL, vol. 95, no. 7, juillet 1986, pages 736-740, White Plains, New York, US; P. SCHMALE: "Coach: A tool for centralized maintenance"
- WIRELESS WORLD, vol. 89, no. 1574, novembre 1983, pages 44-48, Sheepen Place, Olchester, GB; P. BARKER: "Video disc programming for interactive video"

## Description

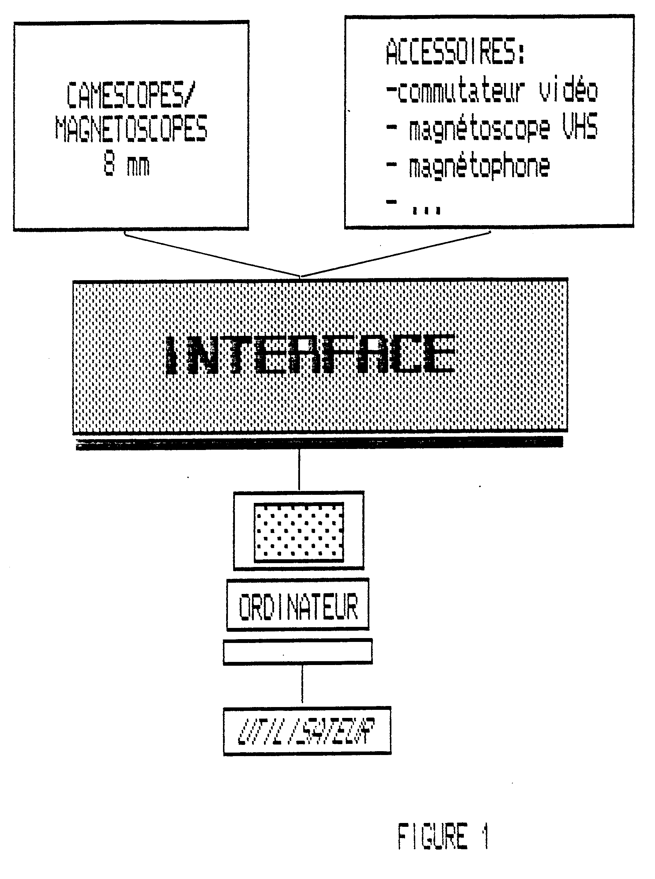

La présente invention se rapporte à une interface (figure 1), appareil qui permet le pilotage simultané par ordinateur d'un ou plusieurs caméscopes (caméras et magnétoscopes) et magnétoscopes 8mm à compteur et prise de télécommande, et de différents accessoires télécommandables tels un commutateur vidéo, la fonction pause/enregistrement d'un magnétoscope, la fonction pause d'un magnétophone, de projecteurs de diapositives, et de façon générale, tout appareil électrique ou électronique pouvant être télécommandé électriquement ou électroniquement. Le document US-A-4 578 718 décrit une interface reliant par un bus parallèle un ordinateur à un magnétoscope et un moniteur pour contrôler les fonctions du magnétoscope et sélectionner le signal en provenance soit du magnétoscope soit de l'ordinateur pour la visualisation.

La présente invention se rapporte aux domaines de l'électronique, de l'informatique et de la vidéo.

La particularité de cette interface par rapport aux systèmes existants : vidéodisque, pilotage de magnétoscope Umatic, VHS... par ordinateur, est d'utiliser un ou plusieurs magnétoscopes ou caméscopes 8mm comme source d'images. L'utilisateur peut ainsi utiliser ses propres images (ce que ne permet pas le vidéo disque), pour les intégrer à un système vidéo-informatique interactif. La souplesse d'utilisation de la combinaison dans un même appareil d'une caméra et d'un magnétoscope, ou caméscope, permet d'envisager de nombreuses applications jusque là difficilement réalisables. La partie caméra pouvant être pilotée de la même façon que la partie magnétoscope et simultanément avec les appareils cités ci-dessus comme accessoires.

Contrairement à d'autres procédés, cette interface ne demande aucune intervention électronique ou électrique à l'intérieur des appareils utilisés, sauf celles prévues éventuellement par le constructeur.

Enfin, le temps d'accès aux images de la cassette vidéo est de l'ordre de quelques secondes, ce qui en fait certainement l'un des systèmes, voire le système vidéo-informatique interactif le plus rapide après le vidéo disque.

Cette interface est constituée d'un ensemble de cartes électroniques qui peuvent être internes ou externes à un ordinateur, et qui permettent, grâce aux logiciels appropriés, de piloter simultanément les caméscopes et magnétoscopes 8mm et les accessoires décrits ci-dessus. Les caméscopes et magnétoscopes 8mm doivent avoir un compteur et être munis d une prise ou d'un dispositif de télécommande. Quant à l'ordinateur, il doit être muni, soit d'une carte munie d'une prise de sortie de signal série de type RS232, soit d'une carte interface d'entrées/sorties parallèles (minimum 16 lignes), de préférence de niveau TTL.

La première fonction de cette interface est de pouvoir télécommander simultanément toutes les fonctions d'un ou de plusieurs caméscopes (caméras et magnétoscopes) ou magnétoscopes 8mm, et tous les accessoires décrits ci-dessus à partir d'un ordinateur, soit en mode direct, soit en mode programmé.

La deuxième fonction de cette interface est de pouvoir sélectionner par ordinateur des images vidéo et son, contenus sur une ou plusieurs cassettes de caméscopes ou magnétoscopes 8mm pour permettre à l'utilisateur de :
- visualiser ou transférer les images sélectionnées, provenant d'une ou plusieurs vidéo-cassettes 8mm, et de les associer avec des images, textes, graphiques, ou images de synthèse obtenus par l'ordinateur ou par une autre source. Ces images peuvent être visionnées chacune sur leur écran propre ou sur un écran commun grâce à :
- soit un commutateur vidéo intégré comme accessoire à l'invention, assurant la sélection de l'image et du son à visionner ou à utiliser,
- soit en utilisant une interface d'incrustation d'images, ne faisant pas partie du brevet décrit ici,
- mettre dans la mémoire de l'ordinateur la sélection d'une ou plusieurs séquences vidéo provenant d'une ou plusieurs cassettes vidéo 8mm, pour les appeler dans n'importe quel ordre à n'importe quel moment pour ensuite les visionner, les intégrer à une application ou les copier d'un magnétoscope à l'autre.

L'utilisation de cette interface n'empêche pas l'adjonction de cartes électroniques supplémentaires dans l'ordinateur, si celui-ci le permet.

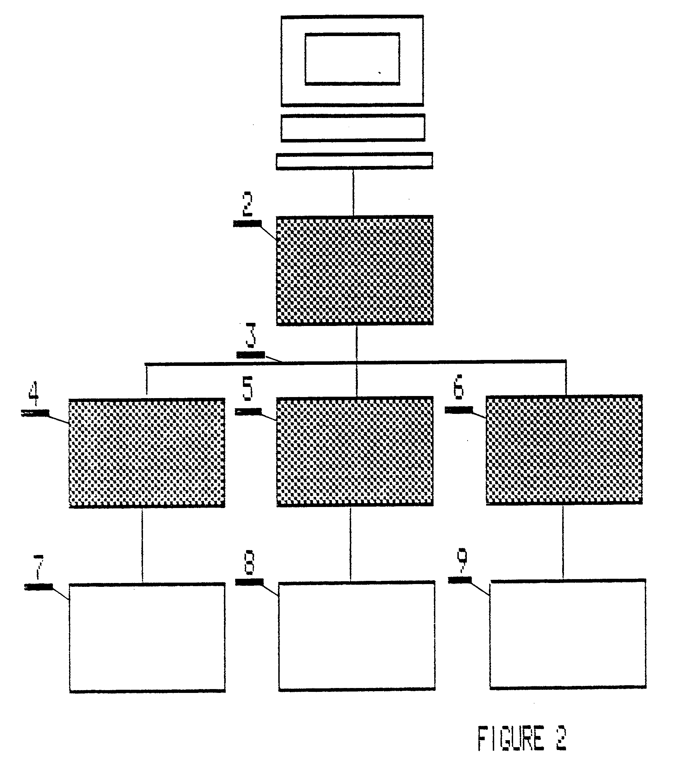

A cet effet, l'invention a pour objet d'adapter les signaux électroniques parallèles ou séries provenant d'un ordinateur, au protocole particulier des signaux de télécommande des appareils à piloter décrits ci-dessus. En effet, le signal série bi-directionnel, qui permet de piloter le ou les caméscopes/magnétoscopes 8mm de façon interactive, est constitué par un ensemble de 8 mots minimum, comprenant chacun 1 bit de départ et 8 bits de données d'environ 100 µs. Chaque mot à une durée comprise entre 1100 et 1800 µs. L'interface selon l'invention est définie par les caractéristiques énoncées à la revendication 1. Pour piloter caméscopes et magnétoscopes 8mm et accessoires, l'interface est constituée de plusieurs sous-ensembles pouvant être ordonnés suivant la figure 2 :
- une carte convertisseur série/parallèle-parallèle/série (2), caractérisée en ce qu'elle comporte, d'une part un convertisseur série-parallèle qui transforme les signaux de la sortie série de type RS232, de tout ordinateur muni de cette prise, en signaux parallèles de 8 lignes ou plus, utilisables par l'interface pour télécommander les caméscopes et magnétoscopes 8mm et accessoires, et d autre part un convertisseur parallèle/série convertissant les informations parallèles (8 ou plus), venant de l'interface et qui contiennent les informations compteur des caméscopes et magnétoscopes 8 mm, en signaux série de type RS232 allant vers l'ordinateur. L'ensemble des informations parallèles sont regroupées sur un bus de commande 3 de l'interface qui comporte donc 16 lignes minimum en parallèles. Ladite carte est conçue autour d'un circuit émetteur/récepteur asynchrone universel (UART AY3 1015 ou circuit équivalent) et de sa logique de commande. Une horloge, constituée par un oscillateur à quartz et par un diviseur de fréquence sélectionnable cadence l'émetteur/récepteur asynchrone. La vitesse de transmission (nombre de bauds), le nombre de bits de données, de stops et de parités sont sélectionnables par un dispositif de commutation. Des mémoires tampons à logique 3 états sont utilisées pour relier les entrées et sorties parallèles au bus de commande de l'interface. Cela permet de déconnecter électriquement la carte 2, si l'on souhaite brancher directement sur le bus de commande des entrées/sorties parallèles provenant d'une carte d'ordinateur. Un circuit résistance-condensateur assure la remise à zéro, lors de la mise sous tension de l'ensemble. A l'entrée/sortie du signal série de type RS232, un dispositif adaptateur de tensions permet de transformer les niveaux RS232 en niveaux TTL et vice versa,
- un bus de commande 3, caractérisé en ce qu'il comporte au moins 16 fils de commande d'entrées/sorties parallèles,
- une carte mère 4, composée des sous-ensembles suivants :
- une alimentation stabilisée, caractérisée par sa fonction de transformer la tension secteur en tensions continues stabilisées, nécessaires au fonctionnement de l'ensemble des circuits composants l'appareil. L'alimentation en tensions continues pourrait aussi être prélevée sur une source extérieure à l'interface,
- un sélecteur de caméscopes/magnétoscopes 8 mm à piloter, caractérisé par un dispositif qui, à partir des informations envoyées sur le bus de commande, sélectionne, grâce à des commutateurs analogiques (type CD 4066 ou similaires), le signal série du caméscope ou magnétoscope 8 mm à télécommander 7,
- une horloge, caractérisée par un oscillateur délivrant un signal carré de fréquence ajustable, ou pilotée par quartz, pouvant comporter un diviseur de fréquence, pour une meilleure stabilité en temps du signal produit. Cette horloge est synchronisée par les bits de départ du signal série des caméscopes et magnétoscopes 8 mm, elle cadence les différents circuits de la carte mère 4,
- un convertisseur parallèle/série caractérisé par un dispositif qui permet de transformer les signaux parallèles du bus de commande en signaux série de télécommande des magnétoscopes/caméscopes 8 mm. Pour ce faire un codage série de 8 bits, s'inscrivant dans les 2 premiers mots de ce signal, permet de télécommander toutes les fonctions (lecture, rembobinage, arrêt, pause,...) des caméscopes/magnétoscopes 8mm. En option, ce circuit pourrait comporter un convertisseur série/parallèle, caractérisé par sa fonction de décodage dans le signal série des mots 2, 3 et 4, indiquant l'état de fonctionnement des caméscopes/magnétoscopes 8 mm pilotés, en un signal parallèle envoyé sur le bus de commande,
- un convertisseur série/parallèle, caractérisé par sa fonction de décodage des mots 6, 7 et 8 du signal série des caméscopes/magnétoscopes 8 mm en un signal parallèle contenant les signaux compteurs. En effet, les mots 7 et 8 comportent les informations multi-plexées du compteur et le mot 6 l'algorithme du codage des informations des mots 7 et 8. Les informations des mots 7 et 8, ou informations du compteur, sont stockées successivement dans des mémoires, suivant l'algorithme délivré par les informations du mot 6, ces mémoires ayant chacune une adresse propre pourront être lues alternativement par le bus de commande de l'interface.
L'ensemble de ces circuits sont réalisés avec des portes et circuits logiques classiques, mais pourrait être remplacé par un système à microprocesseur assurant la même fonction (8052 AH, ...),
- des interfaces des sorties télécommandés 6, caractérisés en ce qu'ils permettent de transformer les signaux de commandes, provenant du bus de commande, en signaux activants, soit des transistors à collecteur ouvert, soit des relais électromécaniques ou électroniques, soit des systèmes équivalents, tels que :
   opto-coupleurs... Ces interfaces permettent de télécommander les accessoires ou autres dispositifs 9, que l'on pourrait connecter à l'interface,
- un commutateur vidéo 5, permettant de sélectionner les signaux de l'une des sources vidéo et son 8 à visionner sur un téléviseur ou moniteur. Ce commutateur est caractérisé par l'emploi de commutateurs analogiques (de type CD 4066 ou similaires), opérant leur commutation sur les signaux normalement présents sur une prise péritélévision (rouge, vert, bleu, commutation lente, son,...). La commutation est télécommandée à partir des informations envoyées sur le bus de commande par l'ordinateur.

L'ensemble des circuits électroniques sont réalisés sur un ou plusieurs circuits imprimés. Ils peuvent être logés dans un ou plusieurs coffrets, ou rester dans l'état afin d'être introduits dans un appareillage particulier (ordinateur, magnétoscope,...).

Cette interface avec les logiciels appropriés permet à l'utilisateur :
- de sélectionner à l'avance, sur une ou plusieurs cassettes vidéo 8 mm, des séquences d'images et de sons pour les présenter lors d'exposés ou de conférences,
- d'effectuer le montage vidéo et son de documents filmés,
- d'intégrer ses propres images et sons dans un logiciel informatique, (questions posées par l'ordinateur et en fonction de la réponse, présentation des images correspondantes, ou questions par l'image du magnétoscope et analyse de réponses par l'ordinateur,...)
- d'associer, d'incruster des images magnétoscope à d'autres images, (sous-titrage, génériques, ...)
- réaliser du cinéma d'animation en vidéo,...

## Revendications

1. Interface de pilotage par ordinateur de caméscopes et magnétoscopes 8 mm avec compteur et prise de télécommande et dont les signaux provenant du compteur ou servant à la télécommande sont du type série, et d'accessoires pouvant être commandés électriquement par des signaux logiques, tels un commutateur vidéo ou la touche pause d'un magnétoscope et/ou magnétophone télécommandable, caractérisée en ce qu'elle comporte un circuit électronique (2) convertisseur série/parallèle-parallèle/série, destiné à transformer, d'une part, les signaux séries de type RS232 d'un ordinateur en signaux parallèles de huit bits ou plus, et d'autre part les signaux parallèles de huit bits ou plus, provenant d'une carte mère (4) faisant partie de ladite interface, en signaux séries de type RS232 retournant vers l'ordinateur, l'ensemble des lignes transmettant les signaux parallèles de cette carte mère (4) constituant le bus de commande (3) de l'interface, la carte mère (4) précitée, connectée de manière à pouvoir échanger d'un côté des signaux parallèles bi-directionnels avec le bus de commande (3) et de l'autre des signaux séries bi-directionnels permettant la télécommande et le décodage des compteurs des caméscopes et magnétoscopes 8 mm (7, 8), une carte commutateur vidéo (5), connectée au bus de commande (3) et qui permet de sélectionner parmi plusieurs sources (7, 8) de signaux vidéo, ceux qui seront envoyés sur un moniteur ou téléviseur, une carte (6) constituée par des interfaces de sorties connectées au bus de commande (3) et aux accessoires (9), permet à partir des informations envoyées par l'ordinateur sur le bus de commande (3) de télécommander, par des prises et des cordons adaptés aux connecteurs correspondants des accessoires (9), une ou plusieurs fonctions desdits accessoires (9) raccordés à ladite interface de pilotage.

2. Interface selon la revendication 1, caractérisée en ce que le circuit électronique (2) convertisseur série/parallèle-parallèle/série comporte une horloge pilotée par quartz, munie d'un diviseur de fréquence permettant la sélection du nombre de bauds du signal série de type RS232, ce signal d'horloge synchronisant un dispositif émetteur-récepteur asynchrone dont les registres de commande des bits de parités, de stops et de données du signal série sont sélectionnables par commutation et dont les informations parallèles peuvent être envoyées sur le bus de commande (3) de l'interface au travers d'un ensemble de mémoires tampons à logique trois états permettant, dans ce cas, de mettre les sorties des mémoires tampons en haute impédance, pour raccorder directement sur le bus de commande (3) de l'interface les seize lignes parallèles d'entrées/sorties minimum d'une carte entrées/sorties parallèles d'un ordinateur.

3. Interface selon la revendication 1 caractérisée en ce que la carte mère (4) comporte une horloge synchronisée par les bits de départ du signal série de télécommande des caméscopes et magnétoscopes 8 mm (7, 8) pilotés, signal constitué par huit mots séries (ou plus) d'environ 1100 à 1800 µs, comprenant chacun un bit de départ et huit bits de données, ladite horloge synchronisant, au niveau de ladite carte mère (4), d'une part un dispositif de conversion des signaux parallèles du bus de commande (3) en un signal série envoyant huit bits de données dans chacun des deux premiers mots du signal de télécommande des caméscopes et magnétoscopes 8 mm (7, 8), permettant ainsi de piloter toutes les fonctions de ces appareils telles que, par exemple, la lecture, le rembobinage, l'enregistrement et la pause et, d'autre part, un dispositif de sélection et de décodage des mots 6, 7 et 8 du signal série, comportant notamment les informations des compteurs, issu des caméscopes et magnétoscopes 8 mm (7, 8), stockant successivement, suivant un code donné par les bits du mot 6, les informations des compteurs des magnétoscopes et caméscopes (7 et 8) contenues dans les mots 7 et 8 dans des mémoires qui peuvent être lues par l'ordinateur, par l'intermédiaire du bus de commande (3) de l'interface.

4. Interface selon la revendication 1 caractérisée en ce que ladite carte commutateur vidéo (5) comporte un ensemble de commutateurs analogiques commutant l'ensemble ou une partie des signaux vidéo de différentes provenances, pour les envoyer sur un ou plusieurs moniteurs ou téléviseurs, ces commutateurs analogiques étant commandés à partir des informations envoyées par l'ordinateur sur le bus de commande de l'interface.

5. Interface selon la revendication 1, caractérisée en ce que ladite carte (6) d'interfaces de sorties comporte un ensemble de dispositifs de télécommande pour les accessoires (9), sous forme de dispositifs adaptant le signal de commande venant du bus de commande (3) de l'interface en un signal correspondant à la commande de l'accessoire (9), constitués, le cas échéant, de transistors, de relais et/ou de circuits intégrés d'entrées/sorties.

## Claims

1. An interface for the control by computer of 8 mm video cameras and VTRs with a counter and remote control jack and of which the signals originating from the counter or serving for remote control are of the series type, and of accessories which can be electrically controlled by logic signals such as a video switch or the pause button of a remote controllable VTR or audio tape recorder control, characterised in that it comprises a series/parallel-parallel/series electronic converter circuit (2), intended to transform, on the one hand, the RS232 type series signals from a computer into parallel signals of 8 bits or more and, on the other hand, the parallel signals of 8 bits or more generated by a master card (4) forming part of said interface into RS232 type series signals sent back to the computer, all the lines transmitting the parallel signals from this master card (4) constituting the interface command bus (3), the aforementioned master card (4) connected so as to be able to exchange, on the one hand, bi-directional parallel signals with the command bus (3) and, on the other hand, bi-directional series signals allowing the remote control and decoding of the counters of 8 mm video cameras and VTRs (7, 8), a video switching card (5) connected to the command bus (3) and allowing video signals which will be sent to a monitor or television to be selected from several sources (7, 8) of video signals, a card (6) consisting of exit interfaces connected to the command bus (3) and to the accessories (9), allows the remote control by the appropriate jacks and leads adapted to the corresponding connectors of the accessories (9) of one or more of the functions of said accessories (9) connected to said control interface from the information sent by the computer to the command bus (3).

2. An interface according to claim 1, characterised in that the series/parallel-parallel/series converter circuit comprises a quartz timer equipped with a frequency divider permitting the selection of the number of bands of the RS232 type series signal, this timer signal synchronizing an asynchronous emitting-receiving device of which the command registers of the parity bits, stop bits and data bits of the series signal are selectable by a switch and of which the parallel information can be sent by the interface command bus (3) through a set of three state logic memory buffers thereby allowing the outputs of the memory buffers to be set at high impedance to connect the minimum of sixteen parallel entry/exit lines of a parallel entry/exit card of a computer directly to the command bus (3) of the interface.

3. An interface according to claim 1, characterised in that the master card (4) comprises a timer synchronized by the bits emanating from the remote control series signal of controlled 8 mm video cameras and VTRs (7, 8), the signal consisting of eight series words (or more) of about 1100 to 1800 µs each comprising a starting bit and eight data bits, said timer synchronizing, at the level of said master card (4), on the one hand, a device for converting the parallel signals of the command bus (3) into a series signal sending eight bits of data in each of the first two words of the remote control signal of the 8 mm video cameras and VTRs (7, 8), thus allowing control of all of the functions of the various apparatus such as reading, rewinding, recording and pause and, on the other hand, a decoder selector device for the words 6, 7 and 8 of the series signal comprising, in particular, information regarding the counters issuing from the 8 mm video cameras and VTRs (7, 8) successively storing, according to a code given by the bits in word 6, information regarding the counters of the video cameras and VTRs (7 and 8) contained in words 7 and 8 into memories which can be read by the computer via the command bus (3) of the interface.

4. An interface according to claim 1, characterized in that said video switching card (5) comprises a set of analog switches which switches all or some of the video signals from different sources in order to send them to one or more monitors or televisions, these analog switches being controlled by information sent by the computer through the command bus of the interface.

5. An interface according to claim 1, characterised in that said card (6) composed of exit interfaces comprises a set of remote control devices for the accessories (9) in the form of devices which adapt the control signal coming from the command bus (3) of the interface into a signal corresponding to the control of the accessory (9) consisting, as necessary, of transistors, relays and/or entry/exit integrated circuits.

## Patentansprüche

1. Schnittstelle für die Steuerung von 8mm Videokameras und Videorekordern durch einen Computer, mit Zählwerk und Fernbedienungsstecker, deren von dem Zählwerk ausgehende bzw. der Fernbedienung dienende Signale serielle Signale sind, und mit elektrisch durch logische Signale steuerbaren Neben einrichtungen, wie z.B. einem Video-Umschalter oder der Pause-Taste eines ferngesteuerten Videorekorders und/oder Tonbandgerätes,
dadurch gekennzeichnet,
daß sie einen elektronischen Schaltkreis (2) zur Wandlung seriell/parallel - parallel/seriell aufweist, der dazu bestimmt ist, einerseits die von einem Computer ausgehenden seriellen Signale der Art RS232 in parallele 8-Bit-Signale oder darüber umzuwandeln, und andererseits die von einer einer Teil der besagten Schnittstelle bildenden Träger-Leitplatte (4) ausgehen den parallelen 8-Bit-Signale oder darüber in an den Computer zurücklaufende serielle Signale der Art RS232 umzuwandeln, wobei die Gesamtheit der die parallelen Signale dieser Träger-Leitplatte (4) übertragenden Leiter den Steuer-Bus (3) der Schnittstelle bilden,
die besagte Träger-Leitplatte (4), die so angeschlossen ist, daß sie einerseits parallele bidirektionale Signale mit dem Steuer-Bus (3) austauschen kann und andererseits serielle bidirektionale Signale zur Fernsteuerung und Entschlüsselung der Zählwerke der 8mm Videokameras und Videorekorder (7, 8) austauschen kann,
eine an dem Steuer-Bus (3) angeschlossene Video-Umschaltplatte (5), welche unter verschiedenen Videosignalquellen (7, 8) diejenigen auszuwählen erlaubt, die auf einen Monitor oder ein Fernsehgerät übertragen werden,
eine Leiterplatte (6), welche von den an dem Steuer-Bus (3) und an den Nebeneinrichtungen (9) anliegenden Ausgangs-Schnittstellen gebildet wird, durch welche, ausgehend von den von dem Computer über den Steuer-Bus (3) gesendeten Informationen und über zu den entsprechenden Verbindern der Nebeneinrichtungen (9) passende Stecker und Verbindungskabel, eine oder mehrere Funktion(en) der besagten Nebeneinrichtungen (9) ferngesteuert werden kann (können), die an die besagte Steuerschnittstelle angeschlossen sind.

2. Schnittstelle nach Anspruch 1, dadurch gekennzeichnet, daß der elektronische Schaltkreis (2) zur Umwandlung seriell/parallel - parallel/seriell einen quartzgesteuerte Taktgeber aufweist, der mit einem Frequenzteiler versehen ist, durch welchen die Baud-Zahl des seriellen RS232-Signals gewählt werden kann, wobei dieses Taktsignal eine asynchrone Sender-Empfänger-Vorrichtung synchronisiert, deren Paritäts-Bit-, Stopp-Bit- und Datenbit-Steuerregister für die seriellen Signale durch Umschalten anwählbar sind, und deren parallele Informationen aur dem Steuer-Bus (3) der Schnittstelle über eine Einheit von mit drei logischen Zuständen arbeitenden Pufferspeichern übertragen werden können, durch die in diesem Falle die Impedanz der Ausgänge dieser Puffer hochgestellt wird, so daß die mindestens sechzehn parallelen Eingangs-/Ausgangs-Leiter einer parallelen Eingangs-/Ausgangsleiterplatte eines Computers direkt an den Steuer-Bus (3) der Schnittstelle angeschlossen werden können.

3. Schnittstelle nach Anspruch 1, dadurch gekennzeichnet, daß die Träger-Leitplatte (4) einen Taktgeber aufweist, der durch die Anfangsbits des seriellen Signals für die Fernsteuerung der dadurch gesteuerten 8mm Videokameras und Videorekorder synchronisiert wird, wobei dieses Signal aus acht (oder mehr) seriellen Worten von etwa 1100 bis 1800 µs besteht, die je ein Anfangsbit und acht Datenbits aufweisen, wobei der besagte Taktgeber einerseits auf der besagten Träger-Leitplatte (4) eine Wandlervorrichtung synchronisiert, die zur Umwandlung der parallelen Signale aus dem Steuer-Bus (3) in ein serielles Signal dient, das acht Datenbits in jedes der beiden ersten Worte des Fernsteuersignals der 8mm Videokameras und Videorekorder (7, 8) sendet, so daß damit alle Funktionen dieser Geräte gesteuert werden können, wie z.B. die Wiedergabe, Zurückspulen, Aufnahme und Pause, und der Taktgeber andererseits eine Anwähl- und Decodiervorrichtung der seriellen Signalwörter 6, 7 und 8 synchronisiert, insbesondere die Zählerinformationen der 8mm Videokameras und der Videorekorder (7, 8) enthaltend, nacheinander, einem durch die Bits des Wortes 6 definierten Code entsprechend, die Informationen der Zähler der Videorekorder und Videokameras (7 und 8) speichernd, die in den Wörtern 7 und 8 in den von dem Computer lesbaren Speichern enthalten sind, und zwar über den Steuer-Bus (3) der Schnittstelle.

4. Schnittstelle nach Anspruch 1, dadurch gekennzeichnet, daß die besagte Video-Umschaltplatte (5) eine Einheit von Analog-Umschaltern aufweist, welche alle oder einen Teil der Videosignale verschiedener Herkunft umschaltet, so daß diese an ein(en) oder mehrere Monitor(e) oder Fernsehgerät(e) gesendet werden können, wobei diese Analog-Umschalter durch die von dem Computer über den Steuer-Bus der Schnittstelle gesendeten Informationen gesteuert werden.

5. Schnittstelle nach Anspruch 1, dadurch gekennzeichnet, daß die besagte Ausgangs-Schnittstellen-Platte (6) eine Einheit zur Fernsteuerung der Nebeneinrichtungen (9) aufweist, und zwar in Form von Vorrichtungen, welche das von dem Steuer-Bus (3) der Schnittstelle kommende Steuersignal in ein der Betätigung der Nebeneinrichtung (9) entsprechendes Signal umwandelt, wobei diese Vorrichtungen ggf. aus Transistoren, Relais und/oder integrierten Eingangs-/Ausgangs-Schaltkreisen bestehen.
